# EUROPEAN PATENT APPLICATION

(11) **EP 4 836 582 A1**
(43) Date of publication of application: **04.11.2026**
(21) Application number: 24931525.0
(22) Date of filing: 28.10.2024
(51) Int. Cl.: H04W 80/06, H04W 72/0453, H04W 72/0446

(54) **DATA TRANSMISSION METHOD, COMMUNICATION APPARATUS AND STORAGE MEDIUM**

(30) Priority: 26.03.2024 CN 202410362802
(71) Applicant: ZTE Corporation, Shenzhen, Guangdong 518057 (CN)
(72) Inventor: HUA, Jian, Shenzhen, Guangdong 518057 (CN); XIN, Yu, Shenzhen, Guangdong 518057 (CN); BAO, Tong, Shenzhen, Guangdong 518057 (CN)
(74) Representative: Ziebig Hengelhaupt Intellectual Property Attorneys Patentanwaltskanzlei PartGmbB
(86) International application number: PCT/CN2024/127845
(87) International publication number: WO 2025/200422

(57) **Abstract**

Provided in the present disclosure are a data transmission method, a communication apparatus and a storage medium. The data transmission method comprises: among P transmitting nodes, there being K transmitting nodes transmitting reference signals on the same M subcarriers in N time-domain symbols, wherein the frequency-domain spacing between two adjacent subcarriers among the M subcarriers is Q subcarriers, a reference signal transmitted by a kth transmitting node among the K transmitting nodes on an mth subcarrier of an nth time-domain symbol among the N time-domain symbols is formed by superimposing G(k) reference sub-signals, and the phase of a gth reference sub-signal among the G(k) reference sub-signals transmitted by the kth transmitting node on the mth subcarriers of two adjacent time-domain symbols differs by the same phase angle θ(g,k).

## Description

The present disclosure claims priority to Chinese patent application No. 202410362802.0, filed on March 26, 2024, the entire content of which is incorporated herein by reference.

### TECHNICAL FIELD

The present disclosure relates to the technical field of communications, and in particular, to a data transmission method, a communication apparatus, and a storage medium.

### BACKGROUND

With the popularization and application of the 5th generation mobile communication technology (5G), new radio (NR) technology has become a key component thereof. In 5G NR, cyclic prefix orthogonal frequency division multiplexing (CP-OFDM) waveforms have been widely used, and effectively improve performance of wireless communication systems by virtue of excellent capabilities thereof against multipath interference and inter-carrier interference.

However, transmitting a sensing signal on a time-frequency resource of the CP-OFDM waveform occupies a time-frequency resource used for communication data. Particularly, in an integrated sensing and communication scenario, when multiple transmitting nodes need to transmit sensing signals simultaneously, more time-frequency resources that should have been used for communication are occupied, resulting in a significant decrease in spectral efficiency.

Therefore, how to enable a receiving end to perform wireless environment monitoring and sensing for multiple transmitting nodes simultaneously without compromising the spectral efficiency of communication has become an urgent problem to be solved in the field of communication technologies.

### SUMMARY

Embodiments of the present disclosure provide a data transmission method, a communication apparatus, and a storage medium, which helps improve spectral efficiency. Technical solutions provided by the embodiments of the present disclosure are as follows.

In an aspect, a data transmission method is provided, and the data transmission method includes: transmitting, by K transmitting nodes among P transmitting nodes, reference signals on same M subcarriers in N time domain symbols; a frequency domain gap between two adjacent subcarriers of the M subcarriers is Q subcarriers, P and Q are positive integers, N and M are integers greater than 1, and K is a positive integer less than or equal to P. A reference signal transmitted by a k-th transmitting node among the K transmitting nodes on an m-th subcarrier in an n-th time domain symbol of the N time domain symbols is formed by superposing G(k) sub-reference signals. A phase of a g-th sub-reference signal among the G(k) sub-reference signals transmitted by the k-th transmitting node on the m-th subcarrier in two adjacent time domain symbols differs by a same phase angle θ(g,k). Herein, k is an index of a transmitting node among the K transmitting nodes and is a non-negative integer less than or equal to K, m is an index of a subcarrier among the M subcarriers and is a non-negative integer less than or equal to M, n is an index of a time domain symbol and is a non-negative integer less than or equal to N, G(k) is an integer greater than or equal to 2, and g is an index of a sub-reference signal among the G(k) sub-reference signals and is a non-negative integer less than or equal to G(k).

In another aspect, a data transmission apparatus is provided, and the data transmission apparatus includes: a communication module, configured to transmit reference signals on same M subcarriers in N time domain symbols; where a frequency domain gap between two adjacent subcarriers of the M subcarriers is Q subcarriers, P and Q are positive integers, N and M are integers greater than 1, and K is a positive integer less than or equal to P. A reference signal transmitted by a k-th transmitting node among the K transmitting nodes on an m-th subcarrier in an n-th time domain symbol of the N time domain symbols is formed by superposing G(k) sub-reference signals. A phase of a g-th sub-reference signal among the G(k) sub-reference signals transmitted by the k-th transmitting node on the m-th subcarrier in two adjacent time domain symbols differs by a same phase angle θ(g,k). Herein, k is an index of a transmitting node among the K transmitting nodes and is a non-negative integer less than or equal to K, m is an index of a subcarrier among the M subcarriers and is a non-negative integer less than or equal to M, n is an index of a time domain symbol and is a non-negative integer less than or equal to N, G(k) is an integer greater than or equal to 2, and g is an index of a sub-reference signal among the G(k) sub-reference signals and is a non-negative integer less than or equal to G(k).

In yet another aspect, a communication apparatus is provided, and the communication apparatus includes: a memory and a processor. The memory is coupled with the processor; the memory is configured to store computer program instructions executable by the processor; and the processor, upon executing the computer program instructions, implements the above data transmission method.

In yet another aspect, a computer-readable storage medium is provided, where the computer-readable storage medium stores computer program instructions, and upon the computer program instructions being run on a computer (e.g., the data transmission apparatus or the communication apparatus), the above data transmission method is implemented.

In yet another aspect, a computer program product is provided, and the computer program product includes computer program instructions, where the computer program instructions, upon being executed, implement the above data transmission method.

### BRIEF DESCRIPTION OF THE DRAWINGS

FIG. 1 is an architecture schematic diagram of a communication system according to the embodiments of the present disclosure.
FIG. 2 is a flowchart of a data transmission method according to the embodiments of the present disclosure.
FIG. 3 is a schematic diagram of a time-frequency resource according to the embodiments of the present disclosure.
FIG. 4 is a schematic diagram of another time-frequency resource according to the embodiments of the present disclosure.
FIG. 5 is a schematic structural diagram of a data transmission apparatus according to the embodiments of the present disclosure.
FIG. 6 is a schematic structural diagram of a communication apparatus according to the embodiments of the present disclosure.

### DETAILED DESCRIPTION

The technical solutions in the embodiments of the present disclosure will be clearly and completely described below with reference to the accompanying drawings in the embodiments of the present disclosure. Obviously, the described embodiments are merely a part of the embodiments of the present disclosure, and not all of the embodiments. Based on the embodiments in the present disclosure, all other embodiments obtained by those of ordinary skill in the art without creative efforts shall fall within the scope of protection of the present disclosure.

In the description of the present disclosure, unless otherwise stated, ''/'' means "or". For example, A/B may represent A or B. "And/or" herein is merely used to describe an association relationship between associated objects, indicating that three relationships may exist. For example, A and/or B may represent: A only, B only, and both A and B. Further, "at least one" means one or more, and "multiple/plurality of" means two or more than two. Wordings such as "first" and "second" do not limit the quantity or the order of execution, and the wordings such as "first" and "second" do not necessarily indicate the defined objects are different.

It should be noted that in the present disclosure, words such as "exemplary" or "for example" are used to describe examples, illustrations or explanations. Any embodiment or design solution described by words such as "exemplary" or "for example" in the present disclosure should not be construed as being more preferred or advantageous than other embodiments or design solutions. Rather, the usage of words such as "exemplary" or "for example" is intended to present related concepts in a specific manner.

With the popularization and application of 5G, NR technology has become a key component thereof. In 5G NR, CP-OFDM waveforms have been widely used, and effectively improve performance of wireless communication systems by virtue of excellent capabilities thereof against multipath interference and inter-carrier interference.

However, transmitting a sensing signal on a time-frequency resource of the CP-OFDM waveform occupies time-frequency resources used for communication data. Particularly, in an integrated sensing and communication scenario, when multiple transmitting nodes need to transmit sensing signals simultaneously, more time-frequency resources that should have been used for communication are occupied, resulting in a significant decrease in spectral efficiency.

Therefore, how to enable a receiving end to perform wireless environment monitoring and sensing for multiple transmitting nodes simultaneously without compromising the spectral efficiency of communication has become an urgent problem to be solved in the field of communication technologies.

In view of this, the present disclosure proposes a data transmission method, where K transmitting nodes among P transmitting nodes transmit reference signals on same M subcarriers in N time domain symbols; a frequency domain gap between two adjacent subcarriers of the M subcarriers is Q subcarriers. A reference signal transmitted by a k-th transmitting node among the K transmitting nodes on an m-th subcarrier in an n-th time domain symbol of the N time domain symbols is formed by superposing G(k) sub-reference signals, and a phase of a g-th sub-reference signal among the G(k) sub-reference signals transmitted by the k-th transmitting node on the m-th subcarrier in two adjacent time domain symbols differs by a same phase angle θ(g,k).

In this way, on a resource block composed of N time domain symbols, for some transmitting nodes, a plurality of sub-reference signals may be transmitted in Doppler domain, and the phase of the g-th sub-reference signal among the G(k) sub-reference signals transmitted by the k-th transmitting node on the m-th subcarrier in two adjacent time domain symbols differs by the same phase angle θ(g,k), thus avoiding mutual interference between signals and facilitating channel estimation. Meanwhile, by adjusting the frequency domain gap Q between two adjacent subcarriers of the M subcarriers, positions of the M subcarriers in frequency domain may be flexibly configured, thereby helping improve spectral efficiency.

The data transmission method provided in the embodiments of the present disclosure may be applied to systems of various communication standards. For example, systems to which the data transmission method provided in the embodiments of the present disclosure is applicable include, but are not limited to, LTE systems, various evolved versions based on LTE, 5G systems and other communication systems. Further, the data transmission method provided in the embodiments of the present disclosure may also be applicable to future-oriented communication systems (e.g., 6G communication systems) and the like.

In the embodiments of the present disclosure, a network architecture of a mobile communication network (including but not limited to 3G, 4G, 5G and future mobile communication networks) may include at least a first communication node and a second communication node. It should be understood that in this example, in downlink, the first communication node may be a network-side device (including but not limited to, for example, a base station), and the second communication node may be a terminal-side device (including but not limited to, for example, a terminal). Certainly, in uplink, the first communication node may also be a terminal-side device, and the second communication node may also be a network-side device. In device-to-device communication between two communication nodes, both the first communication node and the second communication node may be base stations or terminals. The first communication node and the second communication node may be respectively referred to as a first node and a second node for short.

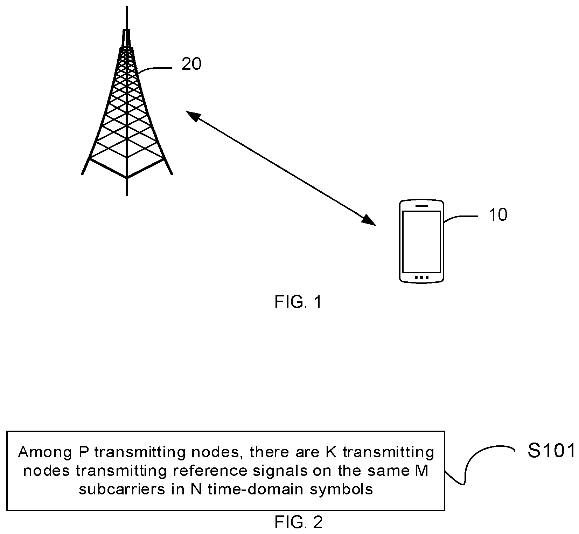

Exemplarily, take the first communication node being a terminal and the second communication node being a base station as an example. As shown in FIG. 1, according to an embodiment of the present disclosure, a communication system is provided, where the communication system includes a terminal 10 and a base station 20. There may be one or more terminals 10 and base stations 20, and the quantity of terminal(s) and the quantity of base station(s) are not limited.

In some embodiments, the base station 20 provides a wireless access service to the terminal 10. The base station 20 provides at least one service coverage area (which may also be referred to as a cell). The terminal 10 entering the area may communicate with the base station 20 via wireless signals, thereby receiving the wireless access service provided by the base station 20.

In some embodiments, the base station (BS) may be a base station in long term evolution (LTE), long term evolution advanced (LTEA), or an evolved node B (evolutional node B, eNB or eNodeB), a base station device in a 5G network, or a base station in a future communication system, etc. The base station may include various network-side devices, such as macro base stations, micro base stations, home base stations, remote radio apparatuses, reconfigurable intelligent surfaces (RISs), routers, relays, TRPs (transmission and reception point, TRP), wireless fidelity (WIFI) devices, etc.

In some embodiments, the terminal may be a device with wireless transceiving functions. The terminal may be a mobile phone (mobile phone), a tablet computer (Pad), a computer with wireless transceiving functions, a virtual reality (VR) terminal, an augmented reality (AR) terminal, a wireless terminal in industrial control (industrial control), a wireless terminal in self driving (self driving), a wireless terminal in remote medical (remote medical), a wireless terminal in smart grid (smart grid), a wireless terminal in transportation safety (transportation safety), a wireless terminal in smart city (smart city), a wireless terminal in smart home (smart home), etc. The embodiments of the present disclosure do not limit application scenarios. The terminal may sometimes also be referred to as a user, a user equipment (User Equipment, UE), an access terminal, a UE unit, a UE station, a mobile station, a mobile platform, a remote station, a remote terminal, a mobile equipment, a UE terminal, a wireless communication device, a UE agent, a UE apparatus, or the like, which is not limited in the embodiments of the present disclosure.

It should be noted that FIG. 1 is merely an exemplary framework diagram, the quantity and names of the devices included in FIG. 1 are not limited, and in addition to the devices shown in FIG. 1, the communication system may also include other devices, such as a core network device.

Application scenarios of the embodiments of the present disclosure are not limited. The system architectures and service scenarios described in the embodiments of the present disclosure are intended to more clearly illustrate the technical solutions of the embodiments of the present disclosure, and do not constitute a limitation on the technical solutions provided in the embodiments of the present disclosure. Those of ordinary skill in the art may understand that with the evolution of network architectures and the emergence of new service scenarios, the technical solutions provided in the embodiments of the present disclosure are also applicable to similar technical problems.

The embodiments of the present disclosure provide a data transmission method. As shown in FIG. 2, the method at least includes S101: K transmitting nodes among P transmitting nodes transmit reference signals on same M subcarriers in N time domain symbols.

A frequency domain gap between two adjacent subcarriers of the M subcarriers is Q subcarriers, P and Q are positive integers, N and M are integers greater than 1, and K is a positive integer less than or equal to P. In this way, by adjusting the frequency domain gap Q between two adjacent subcarriers of the M subcarriers, the positions of the M subcarriers in frequency domain may be flexibly configured, thereby adjusting frequency domain resources occupied by the reference signals to adapt to different communication scenarios.

A reference signal transmitted by a k-th transmitting node among the K transmitting nodes on an m-th subcarrier in an n-th time domain symbol of the N time domain symbols is formed by superposing G(k) sub-reference signals. A phase of a g-th sub-reference signal among the G(k) sub-reference signals transmitted by the k-th transmitting node on the m-th subcarrier in two adjacent time domain symbols differs by the same phase angle θ(g,k). k is an index of a transmitting node among the K transmitting nodes and is a non-negative integer less than or equal to K, m is an index of a subcarrier among the M subcarriers and is a non-negative integer less than or equal to M, n is an index of a time domain symbol and is a non-negative integer less than or equal to N, G(k) is an integer greater than or equal to 2, and g is an index of a sub-reference signal among the G(k) sub-reference signals and is a non-negative integer less than or equal to G(k).

For example, k is a non-negative integer less than or equal to K (that is, k is 0, 1, 2, ..., K-1, or k is 1, 2, 3, ..., K), n is a non-negative integer less than or equal to N (that is, n is 0, 1, 2, ..., N-1, or n is 1, 2, 3, ..., N), m is a non-negative integer less than or equal to M (that is, m is 0, 1, 2, ..., M-1, or m is 1, 2, 3, ..., M), G(k) is an integer greater than or equal to 2, and g is a non-negative integer less than or equal to G(k) (that is, g is 0, 1, 2, ..., G(k)-1, or g is 1, 2, 3, ..., G(k)).

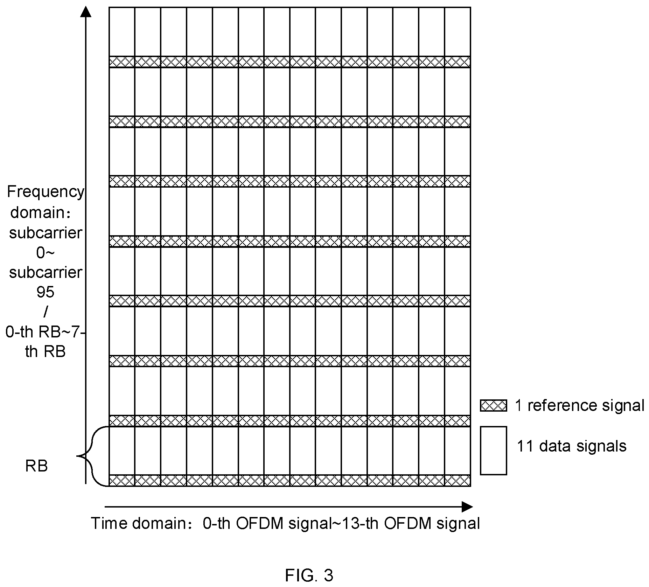

Exemplarily, as shown in FIG. 3, there are 8 transmitting nodes transmitting data signals and reference signals on a resource block composed of 14 orthogonal frequency-division multiplexing (OFDM) symbols (i.e., the 0-th OFDM symbol to the 7-th OFDM symbol in the FIG. 3), where each OFDM symbol includes 8 RBs (96 subcarriers). Each transmitting node transmits a reference signal on same 8 subcarriers in each OFDM symbol, and a frequency domain gap between two adjacent subcarriers of the 8 subcarriers is 12 subcarriers. Each transmitting node transmits a reference signals on the first subcarrier of all RBs on the 14 OFDM symbols.

In some embodiments, Q is an integer multiple of the number of subcarriers included in a resource block.

In some embodiments, the phase of the g-th sub-reference signal transmitted by the k-th transmitting node on the m-th subcarrier in the n-th time domain symbol of the N time domain symbols is related to n.

In some embodiments, the phase of the g-th sub-reference signal transmitted by the k-th transmitting node on the m-th subcarrier in the n-th time domain symbol of the N time domain symbols monotonically increases with an gap of θ(g,k). Moreover, when θ(g,k) is a positive value, the phase of the g-th sub-reference signal transmitted by the k-th transmitting node on the m-th subcarrier in the n-th time domain symbol of the N time domain symbols is positively correlated with n; and when θ(g,k) is a negative value, the phase of the g-th sub-reference signal transmitted by the k-th transmitting node on the m-th subcarrier in the n-th time domain symbol of the N time domain symbols is negatively correlated with n. n is numbered according to the chronological order of the time domain symbols.

In some embodiments, a reference signal transmitted by the k-th transmitting node among the K transmitting nodes on the m-th subcarrier in the n-th time domain symbol of the N time domain symbols is X(k, m, n), then $X \left(k, m, n\right) = {\sum }_{g = 0}^{G - 1} R \left(k, m, g\right) ∗ exp \left(jnθ\left(g, k\right)\right)$ , where R(k,m,g) is the g-th sub-reference signal transmitted by the k-th transmitting node on the m-th subcarrier in the first time domain symbol.

In this way, on a resource block composed of N time domain symbols, for some transmitting nodes, a plurality of sub-reference signals may be transmitted in Doppler domain, and the sub-reference signals are mutually orthogonal, thereby avoiding mutual interference between signals.

Exemplarily, still referring to FIG. 3, a reference signal transmitted by the k-th transmitting node among the first 7 transmitting nodes (transmitting node 0 to transmitting node 6) on the m-th subcarrier in the n-th OFDM symbol is: R(k,m,n)=exp(j*pi*k/16)*exp(jnθ(g,k)), that is, each transmitting node transmits different reference signals on the 0-th OFDM symbol (i.e., the first time domain symbol described above). θ(g,k)=2πk/14, where k is an index of the transmitting node, and k is 0, 1, 2, ..., 6; m is a subcarrier index of the reference signal, and m is 0, 1, 2, ..., 7; n is an OFDM symbol index, and n is 0, 1, 2, ..., 13.

A reference signal transmitted by the transmitting node 7 on the m-th subcarrier in the n-th OFDM symbol is: $X \left(7, m, n\right) = {\sum }_{g = 0}^{6} exp \left(j∗pi∗\left(g+7\right)/16\right) ∗ exp \left(jnθ\left(g, k\right)\right)$
where θ(g,k)=2π(g+7)/14, g is an index of a sub-reference signal actually transmitted (mapped on Doppler-delay domain) by the transmitting node 7, and g is a non-negative integer less than 7; m is a subcarrier index of the reference signal, and m is 0, 1, 2, ..., 7; n is an OFDM symbol index, and n is 0, 1, 2, ..., 13.

In some embodiments, G(k) values corresponding to different transmitting nodes among the K transmitting nodes are different or the same. In this way, the number of sub-reference signals on the Doppler-delay domain that may be transmitted by different transmitting nodes may be different, thereby providing flexibility.

In some embodiments, phase angles θ(g,k) for different sub-reference signals transmitted by different transmitting nodes among the K transmitting nodes are different. In this way, by setting the phase angles for different sub-reference signals transmitted by different transmitting nodes on time-frequency resources to be different, the sub-reference signals mapped in Doppler domain may be dispersed on different Doppler grids, that is, mutually orthogonal.

In some embodiments, the phase angles θ(g,k) for different sub-reference signals transmitted by different transmitting nodes among the K transmitting nodes being different includes: the phase angles θ(g,k) for different sub-reference signals transmitted by different transmitting nodes are respectively one element in a phase angle set. The phase angle set at least includes H different elements, and the H different elements all satisfy the formula θ(g,k)=2πhB/N, where h is a non-negative integer and is less than a difference between floor(N/B) and 1, B is a positive integer and is a system configuration parameter, H is a sum of G(k) values corresponding to different transmitting nodes among the K transmitting nodes, and N is greater than or equal to B*H.

The difference between the floor(N/B) and 1 may also be expressed as floor(N/B)-1, where floor() denotes the floor function.

In some embodiments, the phase angles θ(g,k) for different sub-reference signals transmitted by different transmitting nodes among the K transmitting nodes being different includes: the phase angles θ(g,k) for different sub-reference signals transmitted by different transmitting nodes are respectively one element in a phase angle set. The phase angle set includes N different elements, and the N different elements all satisfy the formula θ(g,k)=2πi/N, where i is a non-negative integer less than N-1, N is greater than or equal to H, and H is a sum of G(k) values corresponding to different transmitting nodes among the K transmitting nodes.

In some embodiments, the P transmitting nodes include at least one of: a terminal, a base station, and an application device (which may also be referred to as a fixed transceiving device).

Exemplarily, the P transmitting nodes are P terminals, or the P transmitting nodes are P base stations, or the P transmitting nodes include an application device. For example, the application device is one of: a router, a customer premises equipment (CPE), a relay node, and a switch.

In some embodiments, the K transmitting nodes transmitting reference signals on the same M subcarriers in the N time domain symbols includes that: the M subcarriers have the same frequency domain positions on the N time domain symbols; and the K transmitting nodes transmit the reference signals on the same N*M subcarrier resources.

In this way, on the one hand, the M subcarriers having the same positions in the N time domain symbols means that the reference signals occupy the same subcarrier positions on different time domain symbols, which helps a receiving end receive and process the reference signals; on the other hand, the K transmitting nodes transmit the reference signals on the same N*M subcarrier resources without additionally occupying other subcarrier resources to transmit the reference signals, which is beneficial for improving spectral efficiency.

In some embodiments, gaps between two adjacent time domain symbols in the N time domain symbols are the same.

In some embodiments, the N time domain symbols are consecutive in time domain.

Exemplarily, still referring to FIG. 3, the 8 transmitting nodes transmit reference signals on the same 8 subcarriers on 14 consecutive time domain symbols.

In some embodiments, there is a subcarrier transmitting a reference signal in each resource block in the N time domain symbols.

Exemplarily, still referring to FIG. 3, each transmitting node among the 8 transmitting nodes transmits reference signals on the same 8 subcarriers in each OFDM symbol among the 14 OFDM symbols, the frequency domain gap between two adjacent subcarriers of the 8 subcarriers is 12 subcarriers, and the first subcarrier in each resource block in the 14 OFDM symbols transmits a reference signal.

In some embodiments, gaps between two adjacent subcarriers of the M subcarriers are the same.

Exemplarily, still referring to FIG. 3, each transmitting node among the 8 transmitting nodes transmits reference signals on the same 8 subcarriers in each OFDM symbol of the 14 OFDM symbols, and the frequency domain gaps between two adjacent subcarriers of the 8 subcarriers are all 12 subcarriers.

In some embodiments, the M subcarriers are consecutive in frequency domain.

Exemplarily, assuming that M consecutive subcarriers in frequency domain are sequentially named as the 0-th subcarrier, the 1-st subcarrier, ..., the (M-1)-th subcarrier, when two subcarriers are consecutive subcarriers in frequency domain, the difference between the indexes of the two subcarriers is 1 (for example, the 1-st subcarrier and the 2-nd subcarrier are consecutive subcarriers in frequency domain, and the difference between the indexes of the 1-st subcarrier and the 2-nd subcarrier is 1). Based on this, it can be concluded that if the differences between the indexes of two adjacent subcarriers among the M subcarriers in frequency domain are all 1, the M subcarriers are consecutive in frequency domain.

In some embodiments, reference signals transmitted by different transmitting nodes among the K transmitting nodes on the same time domain symbol are different.

In some embodiments, reference signals transmitted by the same transmitting node among the K transmitting nodes on the M subcarriers of the same time domain symbol are the same. It can be understood that reference signals transmitted by the same transmitting node among the K transmitting nodes on the M subcarriers of the same time domain symbol are independent of the value of m.

Exemplarily, a reference signal transmitted by the k-th transmitting node among the K transmitting nodes on the M subcarriers in the n-th time domain symbol may be expressed as: $X \left(k, n\right) = {\sum }_{g = 0}^{G - 1} R \left(k, g\right) ∗ exp \left(jnθ\left(g, k\right)\right)$

In some embodiments, modulus values of reference signals transmitted by the same transmitting node among the K transmitting nodes on different time domain symbols are different or the same.

In some embodiments, some of the modulus values of reference signals transmitted by the same transmitting node among the K transmitting nodes on different time domain symbols are the same.

The modulus value may also have other names, such as an amplitude, which is not limited in the present disclosure.

In some embodiments, the P transmitting nodes transmit other signals on other subcarriers except the M subcarriers on the N time domain symbols. The other signals may include at least one of: a data signal, a reference signal of the same type as the above reference signal, and a reference signal of a different type from the above reference signal.

In some embodiments, different transmitting nodes among the P transmitting nodes transmit the other signals on different frequency domain resources of the N time domain symbols. In this way, interference generated between the other signals when the plurality of transmitting nodes transmit signals is reduced.

Exemplarily, still referring to FIG. 3, each of the 8 transmitting nodes transmits reference signals on the first subcarrier of all RBs; data signals (which may also include other reference signals) of the 8 transmitting nodes are respectively mapped on the last 11 subcarriers within each RB, and the 8 RBs from bottom to top correspond to the 8 transmitting nodes respectively. That is, on this resource block, each of the 8 transmitting nodes transmits 8*14 reference signals at the same time-frequency positions, and different transmitting nodes among the 8 transmitting nodes transmit 11*14 data signals at different time-frequency positions.

In some embodiments, there is a transmitting node among the P transmitting nodes that transmits other signals on different frequency domain resources of the N time domain symbols. In this way, when there are many other signals to be transmitted by the transmitting node, a plurality of frequency domain resources of the N time domain symbols may be occupied to transmit the other signals.

In some embodiments, a frequency domain resource bandwidth for each of the P transmitting nodes to transmit other signals is less than a frequency domain gap between the first subcarrier and the last subcarrier of the M subcarriers.

In some embodiments, the power of the reference signal is greater than or equal to the power of the other signals.

For example, in the case where the other signals are other signals, the power of the reference signal is greater than the power of the data signal.

In some embodiments, other transmitting nodes among the P transmitting nodes except the K transmitting nodes transmit reference signals on the same M subcarriers in the N time domain symbols.

In some embodiments, the K transmitting nodes superposedly transmit other signals except the reference signals on the same M subcarriers in the N time domain symbols, and phase angles of the other signals are different from the phase angles of the K transmitting nodes. The other signals may include at least one of: a data signal and a reference signal of a different type from the above reference signal. In this way, data may be transmitted at other vacant positions besides the above reference signals in Doppler domain, thereby improving spectrum resource utilization.

Exemplarily, still referring to FIG. 3, there are 8 transmitting nodes (the transmitting nodes may be any combination of terminals, base stations, or application devices) transmitting data signals and reference signals on a resource block composed of 14 OFDM symbols, where each OFDM symbol includes 8 RBs (96 subcarriers).

Each transmitting node transmits reference signals on same 8 subcarriers in each OFDM symbol, and a frequency domain gap between two adjacent subcarriers of the 8 subcarriers is 12 subcarriers. Each transmitting node transmits reference signals on the 0-th subcarriers (i.e., the first subcarrier) of all RBs; data signals (which may also include other reference signals) of the 8 transmitting nodes are respectively mapped on the last 11 subcarriers within each RB, and the 8 RBs from bottom to top correspond to the 8 transmitting nodes respectively. That is, on this resource block, each of the 8 transmitting nodes transmits 8*14 reference signals at the same time-frequency positions, and different transmitting nodes among the 8 transmitting nodes transmit 11*14 data signals at different time-frequency positions.

A reference signal transmitted by the k-th transmitting node among the first 5 transmitting nodes (transmitting node 0 to transmitting node 4) on the m-th subcarrier in the n-th OFDM symbol is: R(k,m,n)=1*exp(jnθ(g,k)), that is, each of the first 5 transmitting nodes transmits the same reference signal on the 8 subcarriers on the 0th OFDM symbol (i.e., the first time domain symbol described above). θ(g,k)=2πk/14, where k is an index of the transmitting node, and k is 0, 1, 2, ..., 4; m is a subcarrier index of the reference signal, and m is 0, 1, 2, ..., 7; n is an OFDM symbol index, and n is 0, 1, 2, ..., 13.

Reference signals transmitted by transmitting node 5, transmitting node 6, and transmitting node 7 on the m-th subcarrier in the n-th OFDM symbol are: $X \left(k′,m,n\right) = {\sum }_{g = 0}^{3} 1 ∗ exp \left(jnθ\left(g, k\right)\right)$
where θ(g,k)=2π(3k'-10+g)/14, g is an index of a sub-reference signal actually transmitted (mapped on Doppler-delay domain) by each transmitting node, and g is 0, 1, 2; k' is an index of the transmitting node, and k' is 5, 6, 7; m is a subcarrier index of the reference signal, and m is 0, 1, 2, ..., 7; n is an OFDM symbol index, and n is 0, 1, 2, ..., 13.

Exemplarily, still referring to FIG. 3, there are 7 transmitting nodes (transmitting node 0 to transmitting node 6) (the transmitting nodes may be any combination of terminals, base stations, or application devices) transmitting data signals and reference signals on a resource block composed of 14 OFDM symbols, where each OFDM symbol includes 8 RBs (96 subcarriers).

Each transmitting node transmits reference signals on same 8 subcarriers in each OFDM symbol, and a frequency domain gap between two adjacent subcarriers of the 8 subcarriers is 12 subcarriers. Each transmitting node transmits reference signals on the 0-th subcarriers (i.e., the first subcarrier) of all RBs; data signals (which may also include other reference signals) of the first 6 transmitting nodes (i.e., transmitting node 0 to transmitting node 5 in the FIG. 3) are respectively mapped on the last 11 subcarriers within the first 6 RBs (the 0-th RB to the 5-th RB), data signals (which may also include other reference signals) of transmitting node 6 are mapped on the 22 subcarriers within the last 2 RBs (the 6th RB and the 7th RB), and the 8 RBs from bottom to top correspond to the 7 transmitting nodes respectively. That is, on this resource block, each of the 7 transmitting nodes transmits 8*14 reference signals at the same time-frequency positions, different transmitting nodes among the first 6 transmitting nodes respectively transmit 11*14 data signals at different time-frequency positions, and transmitting node 6 transmits 22*14 data signals.

A reference signal transmitted by the k-th transmitting node on the m-th subcarrier in the n-th OFDM symbol is: $X \left(k, m, n\right) = {\sum }_{g = 0}^{1} 1 ∗ exp \left(jnθ\left(g, k\right)\right)$
where θ(g,k)=2π(2k+g)/14, g is an index of a sub-reference signal actually transmitted (mapped on Doppler-delay domain) by each transmitting node, and g is 0, 1; k is an index of the transmitting node, and k is 0, 1, 2, ..., 6; m is a subcarrier index of the reference signal, and m is 0, 1, 2, ..., 7; n is an OFDM symbol index, and n is 0, 1, 2, ..., 13.

Exemplarily, still referring to FIG. 3, there are 8 transmitting nodes (transmitting node 0 to transmitting node 7) (the transmitting nodes may be any combination of terminals, base stations, or application devices) transmitting data signals and reference signals on a resource block composed of 14 OFDM symbols, where each OFDM symbol includes 8 RBs (96 subcarriers).

Each transmitting node transmits reference signals on same 8 subcarriers in each OFDM symbol, and a frequency domain gap between two adjacent subcarriers of the 8 subcarriers is 12 subcarriers. Each transmitting node transmits reference signals on the 0-th subcarrier of all RBs; data signals (which may also include other reference signals) of the 8 transmitting nodes are respectively mapped on the last 11 subcarriers within each RB, the 8 RBs from bottom to top correspond to the 8 transmitting nodes respectively, and transmitting node 7 superposedly transmits a data signal on the 0-th subcarrier of all RBs. That is, on this resource block, each transmitting node transmits 8*14 reference signals at the same time-frequency positions and transmits 11*14 data signals at different time-frequency positions, and transmitting node 7 additionally transmits 5 data signals on different Doppler-delay domains.

A reference signal transmitted by the k-th transmitting node among the first 7 transmitting nodes (transmitting node 0 to transmitting node 6) on the m-th subcarrier in the n-th OFDM symbol is: R(k,m,n)=1*exp(jnθ(g,k)), that is, each of the first 7 transmitting nodes transmits the same reference signal on the 8 subcarriers on the 0-th OFDM symbol (i.e., the first time domain symbol described above), where θ(g,k)=2πk/14, k is an index of the transmitting node, and k is 0, 1, 2, ..., 6; m is a subcarrier index of the reference signal, and m is 0, 1, 2, ..., 7; n is an OFDM symbol index, and n is 0, 1, 2, ..., 13.

A reference signal transmitted by transmitting node 7 on the m-th subcarrier in the n-th OFDM symbol is: $X \left(7, m, n\right) = {\sum }_{g = 0}^{1} 1 ∗ exp \left(jnθ\left(g, k\right)\right)$
where θ(g,k)=2π(g+7)/14, g is an index of a sub-reference signal actually transmitted (mapped on Doppler-delay domain) by the transmitting node, and g is 0, 1; m is a subcarrier index of the reference signal, and m is 0, 1, 2, ..., 7; n is an OFDM symbol index, and n is 0, 1, 2, ..., 13.

Transmitting node 7 superposedly transmits a data signal on the m-th subcarrier in the n-th OFDM symbol, and a phase angle of the data signal is different from the phase angles of all the transmitting nodes.

Exemplarily, still referring to FIG. 3, there are 8 transmitting nodes (transmitting node 0 to transmitting node 7) (the transmitting nodes may be any combination of terminals, base stations, or application devices) transmitting data signals and reference signals on a resource block composed of 14 OFDM symbols, where each OFDM symbol includes 8 RBs (96 subcarriers).

Each transmitting node among the 8 transmitting nodes transmits reference signals on same 8 subcarriers in each OFDM symbol, and a frequency domain gap between two adjacent subcarriers of the 8 subcarriers is 12 subcarriers. Each transmitting node transmits reference signals on the 0-th subcarrier (i.e., the first subcarrier) of all RBs; data signals (which may also include other reference signals) of the 8 transmitting nodes are respectively mapped on the last 11 subcarriers within each RB, and the 8 RBs from bottom to top correspond to the 8 transmitting nodes respectively. That is, on this resource block, each of the 8 transmitting nodes transmits 8*14 reference signals at the same time-frequency positions, and different transmitting nodes among the 8 transmitting nodes transmit 11*14 data signals at different time-frequency positions.

A reference signal transmitted by the k-th transmitting node among the first 7 transmitting nodes (transmitting node 0 to transmitting node 6) on the m-th subcarrier in the n-th OFDM symbol is: R(k,m,n)=exp(j*pi*k/16)*exp(jnθ(g,k)), that is, each transmitting node transmits different reference signals on the 0-th OFDM symbol. θ(g,k)=2πk/14, where k is an index of the transmitting node, and k is 0, 1, 2, ..., 6; m is a subcarrier index of the reference signal, and m is 0, 1, 2, ..., 7; n is an OFDM symbol index, and n is 0, 1, 2, ..., 13.

A reference signal transmitted by transmitting node 7 on the m-th subcarrier in the n-th OFDM symbol is: $X \left(7, m, n\right) = {\sum }_{g = 0}^{6} exp \left(j∗pi∗\left(g+7\right)/16\right) ∗ exp \left(j∗pi∗g∗m/4\right) ∗ exp \left(jnθ\left(g, k\right)\right)$
where θ(g,k)=2π(g+7)/14, g is an index of a sub-reference signal actually transmitted (mapped on Doppler-delay domain) by the transmitting node, and g is 0, 1, 2, ..., 6; m is a subcarrier index of the reference signal, and m is 0, 1, 2, ..., 7; n is an OFDM symbol index, and n is 0, 1, 2, ..., 13. That is, there are 7 reference signals mapped on Doppler-delay domain by transmitting node 7, and their Doppler domain positions are different and their delay domain positions are different.

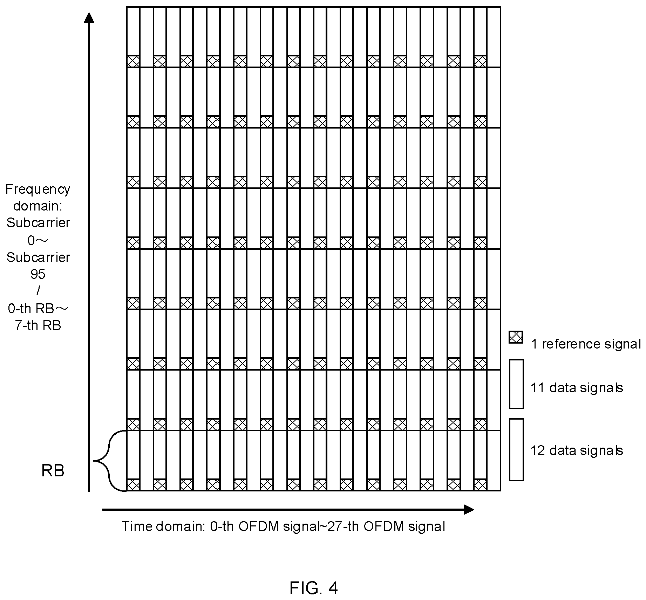

Exemplarily, as shown in FIG. 4, there are 8 transmitting nodes (the transmitting nodes may be any combination of terminals, base stations, or application devices) transmitting data signals and reference signals on a resource block composed of 28 OFDM symbols, where each OFDM symbol includes 8 RBs (96 subcarriers).

Each transmitting node transmits reference signals on same 8 subcarriers every other OFDM symbol, and a frequency domain gap between two adjacent subcarriers of the 8 subcarriers is 12 subcarriers. In OFDM symbols at odd symbol positions (i.e., the 0-th OFDM symbol, the 2-nd OFDM symbol, the 4-th OFDM symbol, ..., the 26-th OFDM symbol in FIG. 4), each transmitting node transmits reference signals on the 0-th subcarrier (i.e., the first subcarrier) of all RBs; data signals of the 8 transmitting nodes are respectively mapped on the remaining 11 subcarriers within each RB, and the 8 RBs from bottom to top correspond to the 8 transmitting nodes respectively. In OFDM symbols at even symbol positions (i.e., the 1-st OFDM symbol, the 3-rd OFDM symbol, the 5-th OFDM symbol, ..., the 27-th OFDM symbol in FIG. 4), data signals of the 8 transmitting nodes are respectively mapped on all subcarriers within each RB. That is, on this resource block, each of the 8 transmitting nodes transmits 8*14 reference signals at the same time-frequency positions, and different transmitting nodes among the 8 transmitting nodes respectively transmit 23*14 data signals at different time-frequency positions.

A reference signal transmitted by the k-th transmitting node among the first 7 transmitting nodes (transmitting node 0 to transmitting node 6) on the m-th subcarrier in the n-th OFDM symbol (the OFDM symbol for transmitting reference signals) is: R(k,m,n)=exp(j*pi*k/16)*exp(jnθ(g,k)), that is, each transmitting node transmits different reference signals on the 0-th OFDM symbol. θ(g,k)=2πk/14, where k is an indexe of the transmitting node, and k is 0, 1, 2, ..., 6; m is a subcarrier index of the reference signal, and m is 0, 1, 2, ..., 7; n is an OFDM symbol index, and n is 0, 1, 2, ..., 13.

A reference signal transmitted by transmitting node 7 on the m-th subcarrier in the n-th OFDM symbol (the OFDM symbol for transmitting reference signals) is: $X \left(7, m, n\right) = {\sum }_{g = 0}^{6} exp \left(j∗pi∗\left(g+7\right)/16\right) ∗ exp \left(jnθ\left(g, k\right)\right)$
where θ(g,k)=2π(g+7)/14, g is an index of a sub-reference signal actually transmitted (mapped on Doppler-delay domain) by the transmitting node, and g is 0, 1, 2, ..., 6; m is a subcarrier index of the reference signal, and m is 0, 1, 2, ..., 7; n is an OFDM symbol index, and n is 0, 1, 2, ..., 13.

Based on this, on a resource block composed of N time domain symbols, for some transmitting nodes, a plurality of reference signals may be transmitted in Doppler domain, and the phase of the g-th sub-reference signal among the G(k) sub-reference signals transmitted by the k-th transmitting node on the m-th subcarrier in two adjacent time domain symbols differs by the same phase angle θ(g,k), thus avoiding mutual interference between signals and facilitating channel estimation. Meanwhile, by adjusting the frequency domain gap Q between two adjacent subcarriers of the M subcarriers, the positions of the M subcarriers in frequency domain may be flexibly configured. In addition, phase angles of different reference signals transmitted by different transmitting nodes are different, so that the reference signals mapped in Doppler domain may be dispersed on different Doppler grids, further enhancing orthogonality and reducing interference, and helping improve spectral efficiency.

The above mainly introduces the solutions of the embodiments of the present disclosure from the perspective of the method. A data transmission apparatus is further shown below, and the data transmission apparatus is configured to execute the data transmission method in any of the above embodiments and implementations thereof.

It can be understood that, in order to implement the data transmission method, the data transmission apparatus includes corresponding hardware structures and/or software modules for performing various functions. Those skilled in the art should easily realize that, in combination with the algorithm steps of the examples described in the embodiments of the present disclosure, the present disclosure may be implemented in the form of hardware or a combination of hardware and computer software. Whether a certain function is executed by hardware or in a manner of driving hardware by computer software depends on preset applications and design constraints of the technical solution. Those skilled in the art may use different methods to implement the described functions for each preset application, but such implementation should not be considered beyond the scope of the present disclosure.

The embodiments of the present disclosure may perform functional module division on the data transmission apparatus according to the above method embodiments, for example, each function may be divided corresponding to each functional module, or two or more functions may be integrated into one functional module. The above integrated module may be implemented either in the form of hardware or in the form of software. It should be noted that the division of modules in the embodiments of the present disclosure is schematic and is merely a logical function division, and other division manners may be adopted in actual implementation. The following description is given by taking the division of each functional module corresponding to each function as an example.

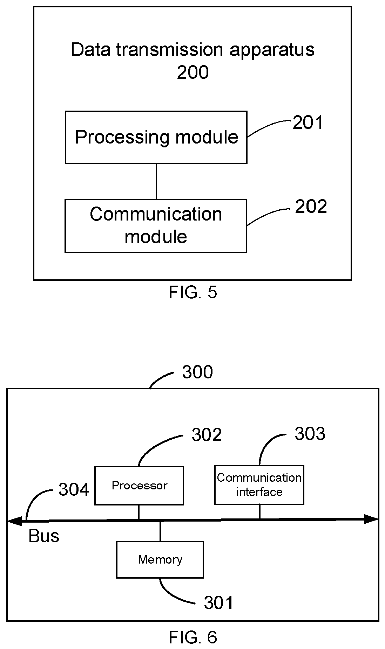

FIG. 5 is a schematic structural diagram of a data transmission apparatus according to the embodiments of the present disclosure. The data transmission apparatus 200 includes: a processing module 201 and a communication module 202.

The processing module 201 is configured to determine that K transmitting nodes among P transmitting nodes transmit reference signal data on same M subcarriers in N time domain symbols.

The communication module 202 is configured to enable that K transmitting nodes among P transmitting nodes transmit reference signals on same M subcarriers in N time domain symbols. A frequency domain gap between two adjacent subcarriers of the M subcarriers is Q subcarriers, P and Q are positive integers, N and M are integers greater than 1, and K is a positive integer less than or equal to P.

A reference signal transmitted by a k-th transmitting node among the K transmitting nodes on an m-th subcarrier in an n-th time domain symbol of the N time domain symbols is formed by superposing G(k) sub-reference signals. A phase of a g-th sub-reference signal among the G(k) sub-reference signals transmitted by the k-th transmitting node on the m-th subcarrier in two adjacent time domain symbols differs by the same phase angle θ(g,k). Herein, k is an index of a transmitting node among the K transmitting nodes and is a non-negative integer less than or equal to K, m is an index of a subcarrier among the M subcarriers and is a non-negative integer less than or equal to M, n is an index of a time domain symbol and is a non-negative integer less than or equal to N, G(k) is an integer greater than or equal to 2, and g is an index of a sub-reference signal among the G(k) sub-reference signals and is a non-negative integer less than or equal to G(k).

In some embodiments, a reference signal transmitted by the k-th transmitting node among the K transmitting nodes on the m-th subcarrier in the n-th time domain symbol of the N time domain symbols is X(k, m, n), then $X \left(k, m, n\right) = {\sum }_{g = 0}^{G - 1} R \left(k, m, g\right) ∗ exp \left(jnθ\left(g, k\right)\right)$ , where R(k,m,g) is the g-th sub-reference signal transmitted by the k-th transmitting node on the m-th subcarrier in the first time domain symbol.

In some embodiments, the phase of the g-th sub-reference signal transmitted by the k-th transmitting node on the m-th subcarrier in the n-th time domain symbol of the N time domain symbols is positively correlated with n.

In some embodiments, phase angles θ(g,k) for different sub-reference signals transmitted by different transmitting nodes among the K transmitting nodes are different.

In some embodiments, the phase angles θ(g,k) for different sub-reference signals transmitted by different transmitting nodes among the K transmitting nodes being different includes that: the phase angles θ(g,k) for different sub-reference signals transmitted by different transmitting nodes are respectively an element in a phase angle set. The phase angle set at least includes H different elements, and the H different elements all satisfy the formula θ(g,k)=2πhB/N, where h is a non-negative integer and is less than the difference between floor(N/B) and 1, B is a positive integer and is a system configuration parameter, H is a sum of G(k) values corresponding to different transmitting nodes among the K transmitting nodes, and N is greater than or equal to B*H.

In some embodiments, the phase angles θ(g,k) for different sub-reference signals transmitted by different transmitting nodes among the K transmitting nodes being different includes that: the phase angles θ(g,k) for different sub-reference signals transmitted by different transmitting nodes are respectively an element in a phase angle set. The phase angle set includes N different elements, and the N different elements all satisfy the formula θ(g,k)=2πi/N, where i is a non-negative integer less than N-1, N is greater than or equal to H, and H is a sum of G(k) values corresponding to different transmitting nodes among the K transmitting nodes.

In some embodiments, G(k) values corresponding to different transmitting nodes among the K transmitting nodes are different or the same.

In some embodiments, the P transmitting nodes include at least one of: a terminal, a base station, and an application device.

In some embodiments, transmitting, by K transmitting nodes, reference signals on the same M subcarriers in the N time domain symbols includes: the M subcarriers have the same frequency domain positions on the N time domain symbols; and the K transmitting nodes transmit the reference signals on the same N*M subcarrier resources.

In some embodiments, gaps between two adjacent time domain symbols in the N time domain symbols are the same.

In some embodiments, the N time domain symbols are consecutive in time domain.

In some embodiments, gaps between two adjacent subcarriers of the M subcarriers are the same.

In some embodiments, there is a subcarrier for transmitting a reference signal in each resource block in the N time domain symbols.

In some embodiments, the M subcarriers are consecutive in frequency domain.

In some embodiments, Q is an integer multiple of a number of subcarriers contained in a resource block.

In some embodiments, reference signals transmitted by different transmitting nodes among the K transmitting nodes on the same time domain symbol are different.

In some embodiments, reference signals transmitted by the same transmitting node among the K transmitting nodes on the M subcarriers of the same time domain symbol are the same.

In some embodiments, modulus values of reference signals transmitted by the same transmitting node among the K transmitting nodes on different time domain symbols are different or the same.

In some embodiments, some of the modulus values of reference signals transmitted by the same transmitting node among the K transmitting nodes on different time domain symbols are the same.

In some embodiments, the communication module 202 is configured to enable the P transmitting nodes to transmit other signals on other subcarriers except the M subcarriers on the N time domain symbols.

In some embodiments, the communication module 202 is configured to enable that there is a transmitting node among the P transmitting nodes that transmits other signals on different frequency domain resources of the N time domain symbols.

In some embodiments, the communication module 202 is configured to enable different transmitting nodes among the P transmitting nodes to transmit other signals on different frequency domain resources of the N time domain symbols.

In some embodiments, a frequency domain resource bandwidth for each of the P transmitting nodes to transmit other signals is less than a frequency domain gap between the first subcarrier and the last subcarrier of the M subcarriers.

In some embodiments, a power of the reference signal is greater than or equal to a power of the other signals.

In some embodiments, the communication module 202 is configured to enable other transmitting nodes among the P transmitting nodes except the K transmitting nodes to transmit reference signals on the same M subcarriers in the N time domain symbols.

In some embodiments, the communication module 202 is configured to enable the K transmitting nodes to transmit other signals except the reference signals on the same M subcarriers in the N time domain symbols, where phase angles of the other signals are different from phase angles of the K transmitting nodes.

In the case of implementing the functions of the above integrated modules in the form of hardware, the embodiments of the present disclosure further provide a structure of a communication apparatus, and the communication apparatus is configured to execute the data transmission method provided in the embodiments of the present disclosure. As shown in FIG. 6, the communication apparatus 300 includes: a communication interface 303, a processor 302, and a bus 304. In some embodiments, the communication apparatus may further include a memory 301.

The processor 302 may be configured to implement or execute various exemplary logic blocks, modules, and circuits described in combination with the embodiments of the present disclosure. The processor 302 may be a central processing unit, a general-purpose processor, a digital signal processor, an application-specific integrated circuit, a field programmable gate array or other programmable logic devices, a transistor logic device, a hardware component, or any combination thereof, which may implement or execute various exemplary logic blocks, modules, and circuits described in combination with the embodiments of the present disclosure. The processor 302 may also be a combination for implementing computing functions, for example, a combination including one or more microprocessors, a combination of a DSP (digital signal processor, DSP) and a microprocessor, etc.

The communication interface 303 is configured to connect with other devices via a communication network. The communication network may be the Ethernet, a radio access network, a wireless local area network (WLAN), etc.

The memory 301 may be a read-only memory (ROM) or other types of static storage devices that may store static information and instructions, a random access memory (RAM) or other types of dynamic storage devices that may store information and instructions, may also be an electrically erasable programmable read-only memory (EEPROM), a magnetic disk storage medium or other magnetic storage devices, or any other media that may be used to carry or store desired program codes in the form of instructions or data structures and that may be accessed by a computer, but is not limited thereto.

As an implementation, the memory 301 may exist independently of the processor 302. The memory 301 may be connected to the processor 302 via the bus 304, and is configured to store instructions or program codes. The processor 302, upon calling and executing the instructions or program codes stored in the memory 301, may implement the data transmission method provided in the embodiments of the present disclosure.

In another implementation, the memory 301 may also be integrated with the processor 302.

The bus 304 may be an extended industry standard architecture (EISA) bus or the like. The bus 304 may be divided into an address bus, a data bus, a control bus, etc. For ease of representation, only one thick line is used in FIG. 6, but this does not mean that there is only one bus or one type of bus.

Some embodiments of the present disclosure provide a computer-readable storage medium (e.g., a non-transitory computer-readable storage medium), where the computer-readable storage medium stores computer program instructions. The computer program instructions, upon running on a computer, enable the computer to execute the data transmission method according to any one of the above embodiments.

In an exemplary implementation, the computer may be the above communication apparatus, and the present disclosure does not limit the specific form of the computer.

In some examples, the above computer-readable storage media may include, but is not limited to: magnetic storage devices (e.g., a hard disk, a floppy disk, a magnetic tape, etc.), optical discs (medium, a compact disk (CD), a digital versatile disk (DVD), etc.), smart cards and flash memory devices (e.g., an erasable programmable read-only memory (EPROM), a card, a stick, a key drive, etc.). Various computer-readable storage media described in the present disclosure may represent one or more devices and/or other machine-readable storage media for storing information. The term "machine-readable storage medium" may include, but is not limited to, wireless channels and various other media capable of storing, containing, and/or carrying instructions and/or data.

The embodiments of the present disclosure provide a computer program product containing instructions, where when the computer program product runs on a computer, the computer is enabled to execute the data transmission method according to any one of the above embodiments.

In the technical solutions provided in the embodiments of the present disclosure, K transmitting nodes among P transmitting nodes transmit reference signals on same M subcarriers in N time domain symbols, and a frequency domain gap between two adjacent subcarriers of the M subcarriers is Q subcarriers. A reference signal transmitted by a k-th transmitting node among the K transmitting nodes on an m-th subcarrier in an n-th time domain symbol of the N time domain symbols is formed by superposing G(k) sub-reference signals. In this way, on a resource block composed of N time domain symbols, for some transmitting nodes, a plurality of sub-reference signals may be transmitted in Doppler domain, and the phase of the g-th sub-reference signal among the G(k) sub-reference signals transmitted by the k-th transmitting node on the m-th subcarrier in two adjacent time domain symbols differs by the same phase angle θ(g,k), thereby avoiding mutual interference between the reference signals and facilitating channel estimation. Meanwhile, by adjusting the frequency domain gap Q between two adjacent subcarriers of the M subcarriers, positions of the M subcarriers in frequency domain may be flexibly configured, which is beneficial for improving spectral efficiency.

The above descriptions are merely specific implementations of the present disclosure, but the protection scope of the present disclosure is not limited thereto. Any changes or substitutions within the technical scope disclosed in the present disclosure should be encompassed within the protection scope of the present disclosure. Therefore, the protection scope of the present disclosure should be subject to the protection scope of the claims.

## Claims

1. A data transmission method, **characterized by** comprising:
transmitting, by K transmitting nodes among P transmitting nodes, reference signals on same M subcarriers in N time domain symbols; a frequency domain gap between two adjacent subcarriers of the M subcarriers is Q subcarriers, wherein P and Q are positive integers, N and M are integers greater than 1, and K is a positive integer less than or equal to P;
wherein a reference signal transmitted by a k-th transmitting node among the K transmitting nodes on an m-th subcarrier in an n-th time domain symbol of the N time domain symbols is formed by superposing G(k) sub-reference signals, a phase of a g-th sub-reference signal among the G(k) sub-reference signals transmitted by the k-th transmitting node on the m-th subcarrier in two adjacent time domain symbols differs by a same phase angle θ(g,k); where k is an index of a transmitting node among the K transmitting nodes and is a non-negative integer less than or equal to K, m is an index of a subcarrier among the M subcarriers and is a non-negative integer less than or equal to M, n is an index of a time domain symbol and is a non-negative integer less than or equal to N, G(k) is an integer greater than or equal to 2, and g is an index of a sub-reference signal among the G(k) sub-reference signals and is a non-negative integer less than or equal to G(k).

2. The method according to claim 1, wherein the reference signal transmitted by the k-th transmitting node among the K transmitting nodes on the m-th subcarrier in the n-th time domain symbol of the N time domain symbols is X(k, m, n) , then $X \left(k, m, n\right) = {\sum }_{g = 0}^{G - 1} R \left(k, m, g\right) ∗ exp \left(jnθ\left(g\right)\right)$ , where R(k,m,g) is the g-th sub-reference signal transmitted by the k-th transmitting node on the m-th subcarrier in a first time domain symbol.

3. The method according to claim 1, wherein the phase of the g-th sub-reference signal transmitted by the k-th transmitting node on the m-th subcarrier in the n-th time domain symbol of the N time domain symbols is positively correlated with n.

4. The method according to claim 1, wherein phase angles θ(g,k) for different sub-reference signals transmitted by different transmitting nodes among the K transmitting nodes are different.

5. The method according to claim 4, wherein that the phase angles θ(g,k) for different sub-reference signals transmitted by different transmitting nodes among the K transmitting nodes being different comprises that: the phase angles θ(g,k) for different sub-reference signals transmitted by different transmitting nodes are each an element in a phase angle set, the phase angle set at least comprises H different elements, the H different elements all satisfy the formula θ(g,k)=2πhB/N, wherein h is a non-negative integer and is less than a difference between floor(N/B) and 1, B is a positive integer and is a system configuration parameter, H is a sum of G(k) values corresponding to different transmitting nodes among the K transmitting nodes, and N is greater than or equal to B*H.

6. The method according to claim 4, wherein that the phase angles θ(g,k) for different sub-reference signals transmitted by different transmitting nodes among the K transmitting nodes being different comprises that: the phase angles θ(g,k) for different sub-reference signals transmitted by different transmitting nodes are each an element in a phase angle set, the phase angle set comprises N different elements, the N different elements all satisfy the formula θ(g,k)=2πi/N, wherein i is a non-negative integer less than N-1, N is greater than or equal to H, and H is a sum of G(k) values corresponding to different transmitting nodes among the K transmitting nodes.

7. The method according to claim 1, wherein G(k) values corresponding to different transmitting nodes among the K transmitting nodes are different or identical.

8. The method according to claim 1, wherein the P transmitting nodes comprise at least one of: a terminal, a base station, and an application device.

9. The method according to claim 1, wherein transmitting, by the K transmitting nodes, reference signals on the same M subcarriers in the N time domain symbols comprises:
the M subcarriers have identical frequency domain positions on the N time domain symbols;
the K transmitting nodes transmit the reference signals on the same N*M subcarrier resources.

10. The method according to claim 1, wherein gaps between two adjacent time domain symbols in the N time domain symbols are identical.

11. The method according to claim 1, wherein the N time domain symbols are consecutive in time domain.

12. The method according to claim 1, wherein gaps between two adjacent subcarriers of the M subcarriers are identical.

13. The method according to claim 1, wherein there is a subcarrier for transmitting a reference signal in each resource block in the N time domain symbols.

14. The method according to claim 1, wherein the M subcarriers are consecutive in frequency domain.

15. The method according to claim 1, wherein Q is an integer multiple of a number of subcarriers contained in a resource block.

16. The method according to claim 1, wherein reference signals transmitted by different transmitting nodes among the K transmitting nodes on a same time domain symbol are different.

17. The method according to claim 1, wherein reference signals transmitted by a same transmitting node among the K transmitting nodes on the M subcarriers of a same time domain symbol are identical.

18. The method according to claim 1, wherein modulus values of reference signals transmitted by a same transmitting node among the K transmitting nodes on different time domain symbols are different or identical.

19. The method according to claim 1, wherein some of modulus values of reference signals transmitted by a same transmitting node among the K transmitting nodes on different time domain symbols are identical.

20. The method according to claim 1, wherein the P transmitting nodes transmit other signals on other subcarriers except the M subcarriers on the N time domain symbols.

21. The method according to claim 20, wherein there is a transmitting node among the P transmitting nodes that transmits the other signals on different frequency domain resources of the N time domain symbols.

22. The method according to claim 20, wherein different transmitting nodes among the P transmitting nodes transmit the other signals on different frequency domain resources of the N time domain symbols.

23. The method according to claim 20, wherein a frequency domain resource bandwidth for each of the P transmitting nodes to transmit the other signals is less than a frequency domain gap between a first subcarrier and a last subcarrier of the M subcarriers.

24. The method according to claim 20, wherein a power of the reference signals is greater than or equal to a power of the other signals.

25. The method according to claim 1, wherein other transmitting nodes among the P transmitting nodes except the K transmitting nodes transmit reference signals on the same M subcarriers in the N time domain symbols.

26. The method according to claim 1, wherein the K transmitting nodes transmit other signals except the reference signals on the same M subcarriers in the N time domain symbols, wherein phase angles of the other signals are different from phase angles of the K transmitting nodes.

27. A communication apparatus, **characterized by** comprising: a memory and a processor; wherein the memory is coupled with the processor; the memory is configured to store instructions executable by the processor; and the processor, upon executing the instructions, performs the method according to any one of claims 1 to 26.

28. A computer-readable storage medium, **characterized in that** the computer-readable storage medium stores computer instructions, and the communication apparatus, upon the computer instructions being run on a communication apparatus, is enabled to perform the method according to any one of claims 1 to 26.
